(19) Europäisches Patentamt / European Patent Office / Office européen des brevets

(11) **EP 4 591 970 A1**

(12) **EUROPEAN PATENT APPLICATION**

(43) Date of publication:
**30.07.2025 Bulletin 2025/31**

(21) Application number: **24201450.4**

(22) Date of filing: **19.09.2024**

(51) International Patent Classification (IPC):
***B01D 71/62*** *(2006.01)* ***C08G 61/12*** *(2006.01)*
***C08G 73/18*** *(2006.01)* ***C08G 73/22*** *(2006.01)*
***C08J 5/22*** *(2006.01)*

(52) Cooperative Patent Classification (CPC):
**C08J 5/2256; B01D 71/62; C08G 10/00;**
**C08G 61/12;** B01D 69/02; B01D 2325/42;
C08G 2261/516; C08J 2339/00; C08J 2339/04

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.01.2024 CN 202410126815**
**15.03.2024 PCT/CN2024/081925**

(71) Applicant: **EVE Hydrogen Energy Co., LTD.**
**HuiZhou Guangdong 516000 (CN)**

(72) Inventors:
- **YOU, Yingxue**
**HuiZhou, Guangdong, 516000 (CN)**
- **LI, Jiaming**
**HuiZhou, Guangdong, 516000 (CN)**
- **LI, Jian**
**HuiZhou, Guangdong, 516000 (CN)**
- **SU, Xiangdong**
**HuiZhou, Guangdong, 516000 (CN)**
- **WANG, Ying**
**HuiZhou, Guangdong, 516000 (CN)**

(74) Representative: **Murgitroyd & Company**
**165-169 Scotland Street**
**Glasgow G5 8PL (GB)**

(54) **NITROGEN-CONTAINING MULTICOMPONENT COPOLYMER, MANUFACTURING METHOD THEREOF, ANIONIC RESIN, AND ANION EXCHANGE MEMBRANE**

(57) An anitrogen-containing multicomponent copolymer is provided, and includes at least two of a chain segment I, a chain segment II, and a chain segment III. A structural formula of the chain segment I is represented by

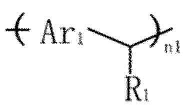
,

where $Ar_1$ is an aryl structural unit. A structural formula of the chain segment II is represented by

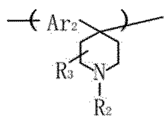
,

where $Ar_2$ is an aryl structural unit. A structural formula of the chain segment III is represented by

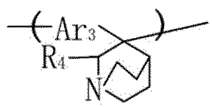
,

where $Ar_3$ is an aryl structural unit.

EP 4 591 970 A1

## Description

TECHNICAL FIELD

The present application belongs to the technical field of batteries, and in particular, relates to a nitrogen-containing multicomponent copolymer, a manufacturing method thereof, an anionic resin and an anion exchange membrane.

BACKGROUND

Anion exchange membranes (AEMs) are widely used in electrolytic baths, fuel batteries, carbon dioxide reduction, hard water softening, desalted water, pure water preparation, hydrometallurgy, rare element separation, pharmaceuticals, sugar industry, amino acid adsorption and other fields. AEMs are often used to separate hydrogen between the anode and the cathode, and provide anion transport passages in the field of hydrogen production technology using electrolysis water. The effective active component of the anion exchange membrane is an anionic resin, which is generally composed of a polymer main chain and charged ionically conductive groups. The polymer main chain and the ionically conductive groups are linked by long or short side chains. Anionic resins having polyphenylene ether, polyarylene ether, polysulfone, phenformin, and the like as main chains have been reported to be relatively large rigid and difficult to form films. For an anion exchange membrane having a quamulticomponent ammonium cation, a quamulticomponent phosphonium cation, an imidazolium cation, and a guanidine-based cation as functional side chains, the anion exchange membrane is easily degraded in an alkaline high-temperature environment, resulting in a significant decrease in ion conduction performance, which affects the service life of a fuel battery.

TECHNICAL PROBLEM

The technical problem is how to improve the flexibility and the alkali resistance stability of anionic resins.

TECHNICAL SOLUTION

In a first aspect, according to embodiments of the present application, it is provided an anitrogen-containing multicomponent copolymer, including: at least two of a chain segment I, a chain segment II, and a chain segment III; where a structural formula of the chain segment I is represented by

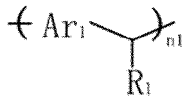

,

where $Ar_1$ is an aryl structural unit; a structural formula of the chain segment II is represented by

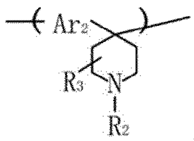

,

where $Ar_2$ is an aryl structural unit; and a structural formula of the chain segment III is represented by

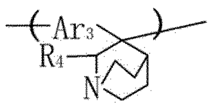

,

where $Ar_3$ is an aryl structural unit.

In a second aspect, according to embodiments of the present application, it is provided a method of manufacturing the above nitrogen-containing multicomponent copolymer, the method including: preparing a monomer raw material, selecting a corresponding aromatic monomer based on aryl structural units comprised in a main chain of the multicomponent copolymer to use the aromatic monomer as the monomer raw material of the main chain, selecting a branched monomer raw material based on chain-segment types in the multicomponent copolymer; where the branched monomer

raw material comprises an acetal monomer whose general formula is represented as

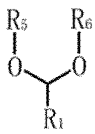,

when the multicomponent copolymer comprises the chain segment I; the branched monomer raw material comprises a piperidone monomer whose general formula is represented as

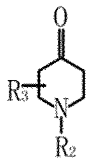,

when the multicomponent copolymer comprises the chain segment II; the branched monomer raw material comprises a quinuclidone monomer whose general formula is represented as

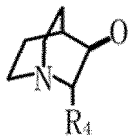,

when the multicomponent copolymer comprises the chain segment III; adding the monomer raw material to an alkyl-based organic solvent, and sufficiently dispersing the monomer raw material, so as to obtain a reaction base solution; adding an organic acid catalyst to the reaction base solution such that at least two of the aromatic monomer, the acetal monomer, the piperidone monomer and the quinuclidone monomerin the reaction base solution undergo a polymerization reaction under the action of the organic acid catalyst; discharging a product obtained from the polymerization reaction in pure water or alkaline solution so as to wash the organic acid catalyst that is residual, and obtaining the multicomponent copolymer after the product is washed and dried.

In a third aspect, according to embodiments of the present application, it is provided a anionic resin including: at least two of a chain segment I, a chain segment IV, and a chain segment V; where a structural formula of the chain segment I is represented by

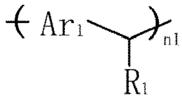,

where $Ar_1$ is an aryl structural unit; a structural formula of the chain segment IV is represented by

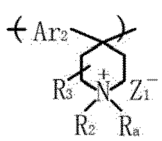,

where $Ar_2$ is an aryl structural unit, and $Z_1^-$ denotes an anion; and a structural formula of the chain segment V is represented by

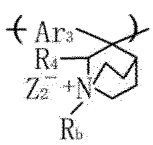,

where $Ar_3$ is an aryl structural unit, and $Z_2^-$ denotes an anion.

In a fourth aspect, according to embodiments of the present application, it is provided a method for manufacturing an anionic resin, including enabling the above multicomponent copolymer and quaternization reagent undergo a quaternization reaction to obtain the anionic resin, where the quaternization reagent includes at least one of iodomethane; iodoethane; 1-iodopropane; 1-iodobutane; 1-iodopentane; 1-iodohexane; bromoethane; 1-bromopropane; 1-bromobutane; 1-bromopentane; 1-bromohexane; bromocyclohexane; bromocyclopentane; methyl methanesulfonate; ethyl methanesulfonate; propyl methanesulfonate; butyl methanesulfonate; N-propyl ethyl sulfonate; ethanesulfonic acid ethyl ester; 3-butynyl methanesulfonate; ethenesulfonic acid, 2-propenyl ester; methyl benzenesulfonate; methyl p-toluenesulfonate; methyl nitrobenzenesulfonate; methyl trifluoromethanesulfonate; ethyl trifluoromethanesulfonate; ethyl toluenesulfonate; toluene-4-sulfonic acid cyclobutyl ester; P-toluenesulfonic acid n-butyl ester; benzenesulfonic acid neopentyl ester; tetrahydro-2H-pyran-4-yl methanesulfonate; or P-toluenesulfonic acid cyclohexyl ester.

In a fifth aspect, according to embodiments of the present application, it is provided an anion exchange membrane including the above anionic resin.

## BENEFICIAL EFFECT

The multicomponent copolymer provided by this application has excellent structural stability, and the different types of chain segments contained in the multicomponent copolymer may be firmly connected. Therefore, the anion exchange membrane manufactured by the multicomponent copolymer has good flexibility and may not be easy to break during the application process. In addition, anionic resins and anion exchange membranes manufactured by using the multicomponent copolymers provided in this application are also beneficial to improving the alkali resistance of such materials, so that when the anionic resins and the anion exchange membranes are used in fields such as electrolysis of water to generate hydrogen, the membranes can remain stable and not be easily degraded.

The anion exchange membrane of this application has excellent flexibility and alkali resistance. When the anion exchange membrane is applied in an electrolytic bath, it can not only optimize the interface contact between electrodes but also improve the working stability of the electrolytic bath.

## DETAILED DESCRIPTION

In embodiments of the present application, the $Ar_1$, the $Ar_2$, and the $Ar_3$ each independently include at least one of following structural units:

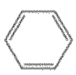 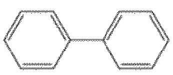 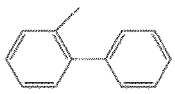 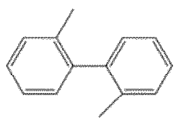

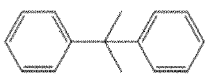 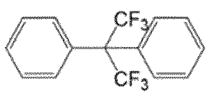 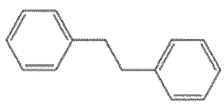 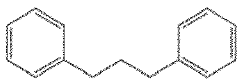

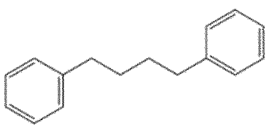 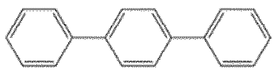 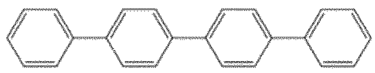

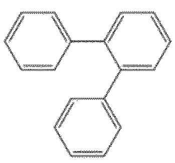 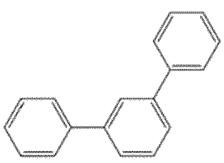 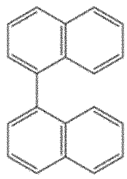 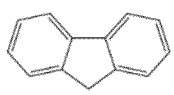

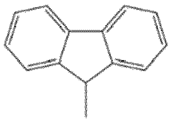
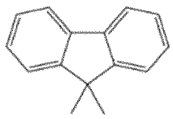
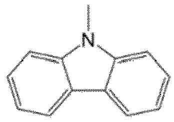
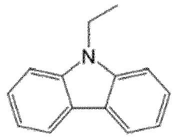

In embodiments of the present application, the $R_1$, the $R_2$, the $R_3$, and the $R_4$ are each independently selected from hydrogen, hydrocarbyl, or substituted hydrocarbyl.

In embodiments of the present application, the multicomponent copolymer includes a multicomponent chain segment I including the chain segment I and the chain segment II, where a structural formula of the multicomponent chain segment I is represented by

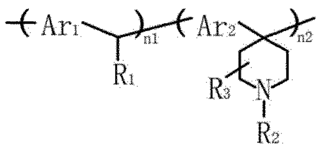,

where n1 denotes a degree of polymerization of the chain segment I, and is a positive integer; and n2 denotes a degree of polymerization of the chain segment II, and is a positive integer.

In embodiments of the present application, the multicomponent copolymer includes a multicomponent chain segment II including the chain segment I and the chain segment III, a structural formula of the multicomponent chain segment II is represented by

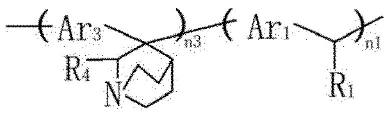,

where n1 denotes a degree of polymerization of the chain segment I, and is a positive integer; and n3 denotes a degree of polymerization of the chain segment III, and is a positive integer.

In embodiments of the present application, the multicomponent copolymer includes a multicomponent chain segment III comprising the chain segment II and the chain segment III, a structural formula of the multicomponent chain segment III is represented by

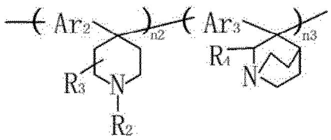,

where n2 denotes a degree of polymerization of the chain segment II, and is a positive integer; and n3 denotes a degree of polymerization of the chain segment III, and is a positive integer.

In embodiments of the present application, the multicomponent copolymer includes a multicomponent chain segment IV including the chain segment I, the chain segment II, and the chain segment III, the multicomponent chain segment IV is represented by

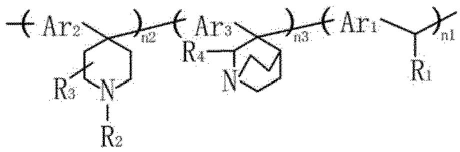,

where n1 denotes a degree of polymerization of the chain segment I, and is a positive integer; n2 denotes a degree of polymerization of the chain segment II, and is a positive integer; and n3 denotes a degree of polymerization of the chain segment III, and is a positive integer.

In embodiments of the present application, n1, n2, n3 are each independently selected from integers between 10 and 1000000. n1 may be 10, 500, 2000, 10000, 500000, 1000000, or the like, but is not limited to the numerical values

enumerated, and other numerical values not enumerated within the numerical range are equally applicable. n2 may be 10, 500, 2000, 10000, 500000, 1000000, or the like, but is not limited to the numerical values enumerated, and other numerical values not enumerated within the numerical range are equally applicable. n3 may be 10, 500, 2000, 10000, 500000, 1000000, or the like, but is not limited to the numerical values enumerated, and other numerical values not enumerated within the numerical range are equally applicable.

In embodiments of the application, n1, n2, n3 are each independently selected from integers between 50 and 300. n1 may be 50, 100, 150, 300, or the like, but is not limited to the numerical values recited, and other numerical values not recited within the numerical range are equally applicable. n2 may be 50, 100, 150, 300, or the like, but is not limited to the numerical values recited, and other numerical values not recited within the numerical range are equally applicable. n3 may be 50, 100, 150, 300, or the like, but is not limited to the numerical values enumerated, and other numerical values not enumerated within the numerical range are equally applicable. n4 may be 50, 100, 150, 300, or the like, but is not limited to the numerical values enumerated, and other numerical values not enumerated within the numerical range are equally applicable.

In embodiments of the application, the acetal monomer includes at least one of the following monomers:

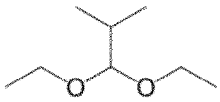 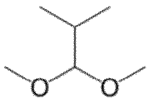 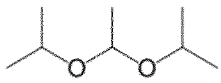 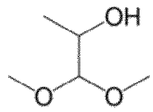

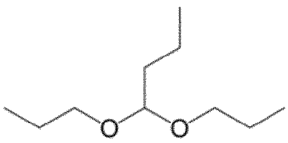 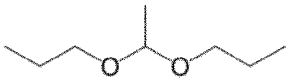 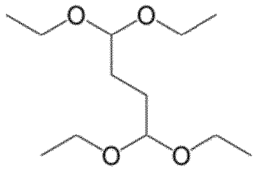 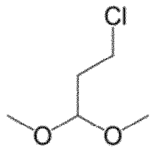

In embodiments of the application, the piperidone monomer includes at least one of the following monomers:

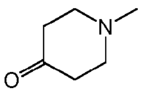 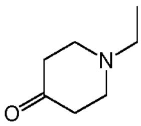 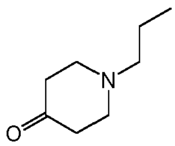 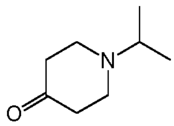 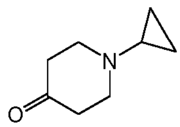

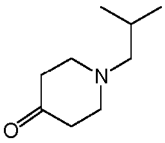 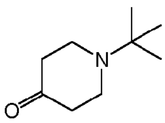 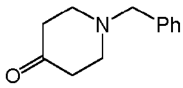 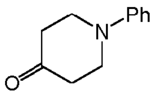 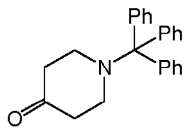

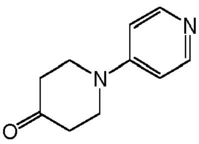 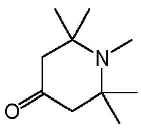 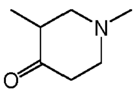 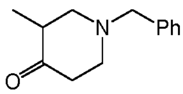 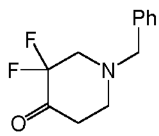 .

In embodiments of the application, the quinuclidone monomer includes at least one of the following monomers:

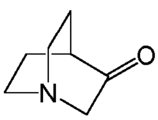 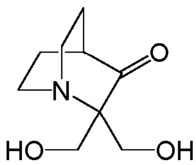 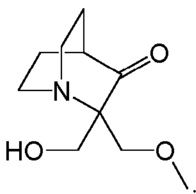

In embodiments of the application, the organic acid catalyst includes at least one of methanesulfonic acid, perfluoropropionic acid, trifluoroacetic acid, trifluoromethanesulfonic acid, and heptafluorobutyric acid.

In embodiments of the application, the method of manufacturing the nitrogen-containing multicomponent copolymer further includes reducing a temperature of the reaction base solution to a range from -5°C to 3°C before a step of adding an organic acid catalyst to the reaction base solution; a step of adding the organic acid catalyst to the reaction base solution such that at least two of the aromatic monomer, the acetal monomer, the piperidone monomer and the quinuclidone monomer in the reaction base solution undergo the polymerization reaction under the action of the organic acid catalyst includes: raising the temperature of the reaction base solution to a temperature ranging from 5°C to 24°C, and polymerizing the at least two of the aromatic monomer, the acetal monomer, the piperidone monomer and the quinuclidone monomer for 4~48h under the temperature ranging from 5°C to 24°C.

In embodiments of the application, the alkyl-based organic solvent includes at least one of dichloromethane, trichloromethane, chloroform, and tetrahydrofuran.

In embodiments of the application, the alkaline solution includes at least one of sodium hydroxide, sodium bicarbonate, potassium bicarbonate, potassium carbonate, sodium carbonate or potassium hydroxide.

In embodiments of the application, the $Ar_1$, the $Ar_2$, and the $Ar_3$ each independently include at least one of the following structural units:

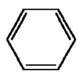
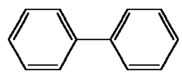
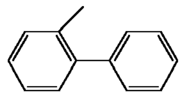
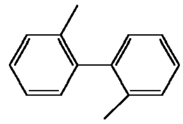

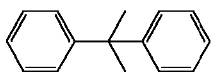
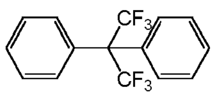
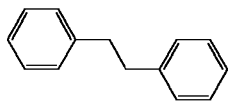
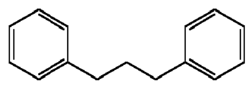

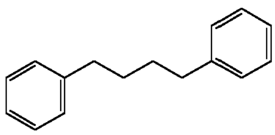
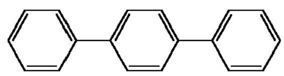
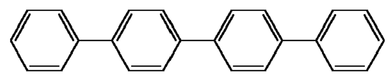

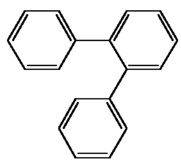
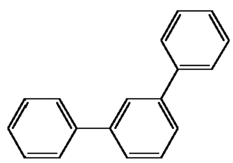
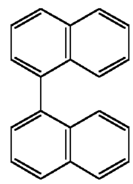
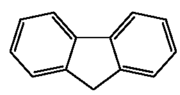

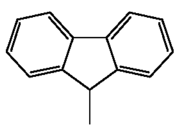
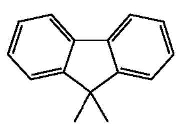
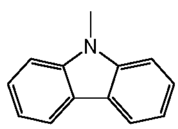
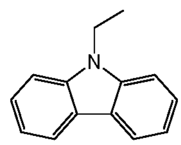

In embodiments of the application, the $R_1$, the $R_2$, the $R_3$, and the $R_4$ are each independently selected from hydrogen, hydrocarbyl, or substituted hydrocarbyl.

In embodiments of the application, the anionic resin comprises a multicomponent chain segment V including the chain segment I and the chain segment IV, a structural formula of the multicomponent chain segment V is represented by

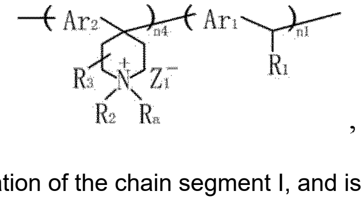
,

where n1 denotes a degree of polymerization of the chain segment I, and is a positive integer; n4 denotes a degree of polymerization of the chain segment IV, and is a positive integer; the $R_a$ is selected from one of aryl, $C_1$ to $C_{10}$ chain alkyl, and $C_3$ to $C_{10}$ cycloalkyl.

In embodiments of the application, the anionic resin includes a multicomponent chain segment VI including the

chain segment I and the chain segment V, a structural formula of the multicomponent chain segment VI is represented by

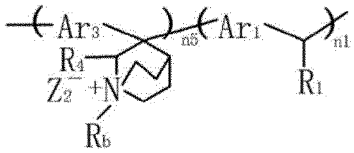

,

and n1 denotes a degree of polymerization of the chain segment I, and is a positive integer; n5 denotes a degree of polymerization of the chain segment V, and is a positive integer; the $R_b$ is selected from one of aryl, $C_1$ to $C_{10}$ chain alkyl, and $C_3$ to $C_{10}$ cycloalkyl.

In embodiments of the application, the anionic resin includes a multicomponent chain segment VII comprising the chain segment IV and the chain segment V, where a structural formula of the multicomponent chain segment VII is represented by

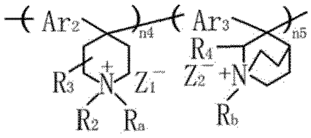

,

where n4 denotes a degree of polymerization of the chain segment IV, and is a positive integer; n5 denotes a degree of polymerization of the chain segment V, and is a positive integer; the $R_a$ and the $R_b$ each independently selected from one of aryl, $C_1$ to $C_{10}$ chain alkyl, and $C_3$ to $C_{10}$ cycloalkyl.

In embodiments of the application, the anionic resin includes a multicomponent chain segment VIII including the chain segment I, the chain segment IV and the chain segment V, where a structural formula of the multicomponent chain segment VIII is represented by

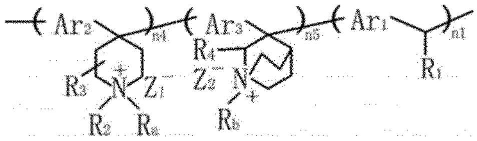

,

where n1 denotes a degree of polymerization of the chain segment I, and is a positive integer; n4 denotes a degree of polymerization of the chain segment IV, and is a positive integer; n5 denotes a degree of polymerization of the chain segment V, and is a positive integer; the $R_a$ and the $R_b$ each independently selected from one of aryl, $C_1$ to $C_{10}$ chain alkyl, and $C_3$ to $C_{10}$ cycloalkyl.

In embodiments of the application, n1, n4, n5 are each independently selected from integers between 10 and 1000000. n1 may be 10, 500, 2000, 10000, 500000, 1000000, or the like, but is not limited to the numerical values enumerated, and other numerical values not enumerated within the numerical range are equally applicable. n4 may be 10, 500, 2000, 10000, 500000, 1000000, or the like, but is not limited to the numerical values enumerated, and other numerical values not enumerated within the numerical range are equally applicable. n5 may be 10, 500, 2000, 10000, 500000, 1000000, or the like, but is not limited to the numerical values listed, and other numerical values not listed within the numerical range are equally applicable.

In embodiments of the application, n1, n4, n5 are each independently selected from integers between 50 and 300. n1 may be 50, 100, 150, 300, or the like, but is not limited to the numerical values recited, and other numerical values not recited within the numerical range are equally applicable. n4 may be 50, 100, 150, 300, or the like, but is not limited to the numerical values listed, and other numerical values not listed in the numerical range are also applicable. n5 may be 50, 100, 150, 300, or the like, but is not limited to the numerical values recited, and other numerical values not recited within the numerical range are equally applicable.

Example 1

The multicomponent copolymer including a chain segment I whose structural formula is represented as

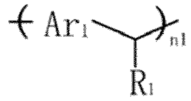

and a chain segment II whose structural formula is represented as

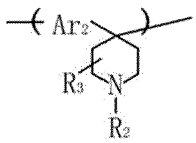

is manufactured, and this multicomponent copolymer includes a multicomponent chain segment I whose structural formula is represented as

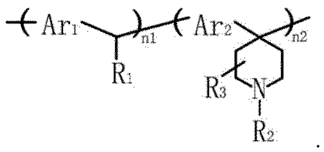

Manufacture of copolymer 1-1

At step S1, 0.15moL of 1,3-diphenylbenzene, 0.09moL of 1-Methyl-4-piperidone and 0.09moL of isobutyraldehyde diethyl acetal are taken respectively.

At step S2, the raw materials that are weighed in step S1 are added into 50 mL of dichloromethane, and the raw materials are thoroughly mixed and dispersed in the dichloromethane to obtain a reaction base solution.

At step S3, 90mL of trifluoromethanesulfonic acid is added dropwise to the reaction base solution at a temperature of -5°C, the reaction system is raised to a temperature of 24°C after the drip addition is completed, and the raw materials are subjected to an alkylation reaction at this temperature for 16 hours.

At step S4, after completion of the reaction in step S3, a product is discharged in pure water, then filtered, and a resulting solid is pulverized, washed by using pure water, and dried in sequence, so as to obtain the final product, i.e., the copolymer 1-1.

A structural formula of the copolymer 1-1 is a following formula:

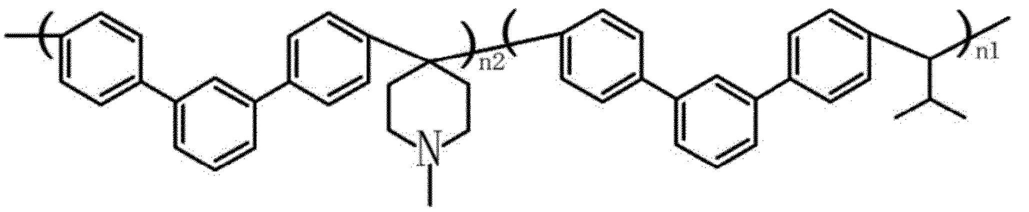

Manufacture of copolymer 1-2

At step S1, 0.15moL of p-Terphenyl, 0.09moL of 1-Methyl-4-piperidone and 0.09moL of isobutyraldehyde diethyl acetal are taken respectively.

At step S2, the raw materials weighed in step S1 are added into 60 mL of dichloromethane, and the raw materials are thoroughly mixed and dispersed in the dichloromethane to obtain a reaction base solution.

At step S3, 90mL of trifluoromethanesulfonic acid is added dropwise to the reaction base solution at a temperature of 3°C, the reaction system is raised to a temperature of 13°C after the drip addition is completed, and the raw materials are subjected to an alkylation reaction at this temperature for 24 hours.

At step S4, after completion of the reaction in step S3, a product is discharged in pure water, then filtered, and a resulting solid is pulverized, washed by using pure water, and dried in sequence, so as to obtain the final product, i.e., the copolymer 1-2.

A structural formula of the copolymer 1-2 is a following formula:

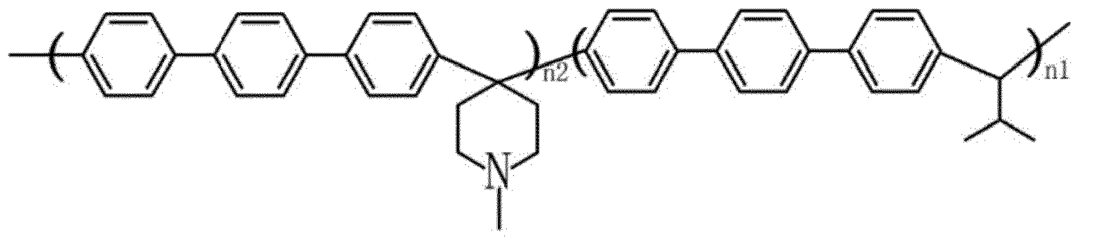

Example 2

The multicomponent copolymer including a chain segment I whose structural formula is represented as

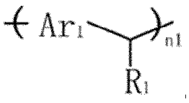

and a chain segment III whose structural formula is represented as

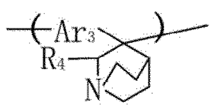

is manufactured, and includes a multicomponent chain segment II whose structural formula is represented as

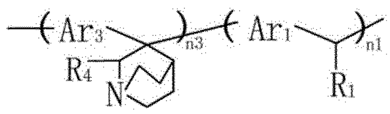

Manufacture of copolymer 2-1

At step S1, 0.15moL of 1,3-Diphenylbenzene, 0.12moL of 3-quinuclidinone hydrochloride and 0.05moL of isobutyraldehyde diethyl acetal are taken respectively.

At step S2, the raw materials weighed in step S1 are added into 45 mL of dichloromethane, and the raw materials are thoroughly mixed and dispersed in the dichloromethane to obtain a reaction base solution.

At step S3, 120mL of trifluoromethanesulfonic acid is added dropwise to the reaction base solution at a temperature of 0°C, the reaction system is raised to a temperature of 24°C after the drip addition is completed, and the raw materials are subjected to an alkylation reaction at this temperature for 36 hours.

At step S4, after completion of the reaction in step S3, a product is discharged in pure water, then filtered, and a resulting solid is pulverized, washed by using pure water, and dried in sequence, so as to obtain the final product, i.e., the copolymer 2-1.

A structural formula of the copolymer 2-1 is a following formula:

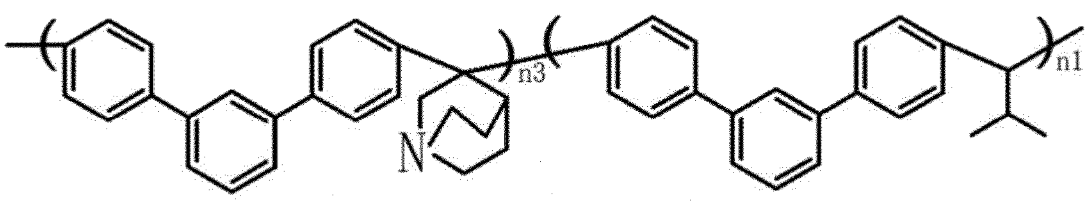

Manufacture of copolymer 2-2

At step S1, 0.15moL of biphenyl, 0.12moL of 3-quinuclidinone hydrochloride and 0.05moL of isobutyraldehyde diethyl acetal are taken respectively.

At step S2, the raw materials weighed in step S1 are added into 45 mL of dichloromethane, and the raw materials

are thoroughly mixed and dispersed in the dichloromethane to obtain a reaction base solution.

At step S3, 100mL of trifluoromethanesulfonic acid is added dropwise to the reaction base solution at a temperature of 0°C, the reaction system is raised to a temperature of 13°C after the drip addition is completed, and the raw materials are subjected to an alkylation reaction at this temperature for 12 hours.

At step S4, after completion of the reaction in step S3, a product is discharged in pure water, then filtered, and a resulting solid is pulverized, washed by using pure water, and dried in sequence, so as to obtain the final product, i.e., the copolymer 2-2.

A structural formula of the copolymer 2-2 is a following formula:

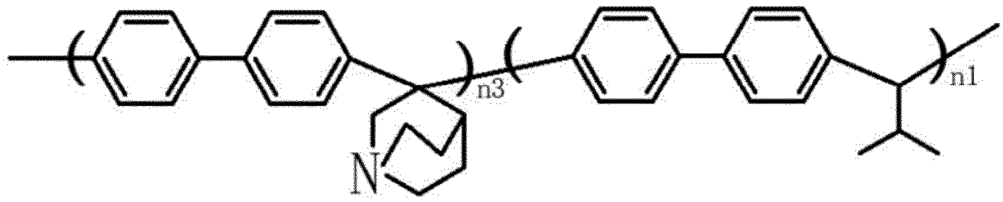

Example 3

The multicomponent copolymer including a chain segment II whose structural formula is represented as

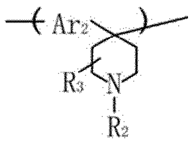

and a chain segment III whose structural formula is represented as

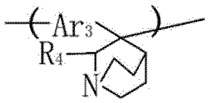

is manufactured, and includes a multicomponent chain segment III whose structural formula is represented as

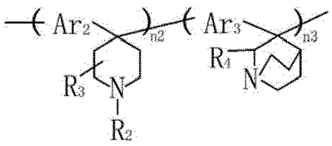

Manufacture of copolymer 3-1

At step S1, 0.15moL of p-terphenyl, 0.09moL of 3-quinuclidinone hydrochloride and 0.09moL of 1-Methyl-4-piperidone are taken respectively.

At step S2, the raw materials weighed in step S1 are added into 50 mL of dichloromethane, and the raw materials are thoroughly mixed and dispersed in the dichloromethane to obtain a reaction base solution.

At step S3, 120mL of trifluoromethanesulfonic acid is added dropwise to the reaction base solution at a temperature of 0°C, the reaction system is raised to a temperature of 13°C after the drip addition is completed, and the raw materials are subjected to an alkylation reaction at this temperature for 8 hours.

At step S4, after completion of the reaction in step S3, a product is discharged in pure water, then filtered, and a resulting solid is pulverized, washed by using pure water, and dried in sequence, so as to obtain the final product, i.e., the copolymer 3-1.

A structural formula of the copolymer 3-1 is a following formula:

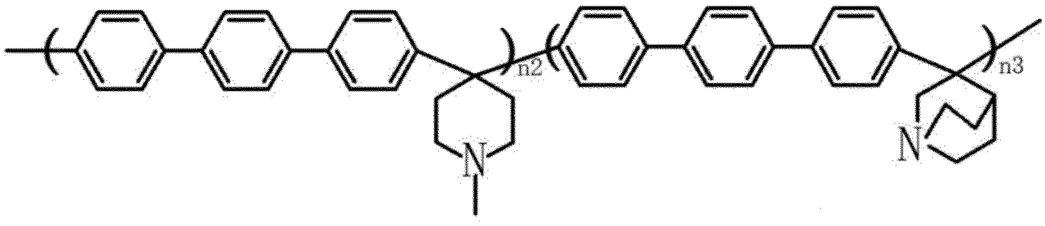

Manufacture of copolymer 3-2

At step S1, 0.15moL of 1,3-diphenylbenzene, 0.09moL of 3-quinuclidinone hydrochloride and 0.09moL of 1-Ethyl-4-piperidone are taken respectively.

At step S2, the raw materials weighed in step S1 are added into 50 mL of dichloromethane, and the raw materials are thoroughly mixed and dispersed in the dichloromethane to obtain a reaction base solution.

At step S3, 120mL of trifluoromethanesulfonic acid is added dropwise to the reaction base solution at a temperature of 0°C, the reaction system is raised to a temperature of 8°C after the drip addition is completed, and the raw materials are subjected to an alkylation reaction at this temperature for 14 hours.

At step S4, after completion of the reaction in step S3, a product is discharged in pure water, then filtered, and a resulting solid is pulverized, washed by using pure water, and dried in sequence, so as to obtain the final product, i.e., the copolymer 3-2.

A structural formula of the copolymer 3-2 is a following formula:

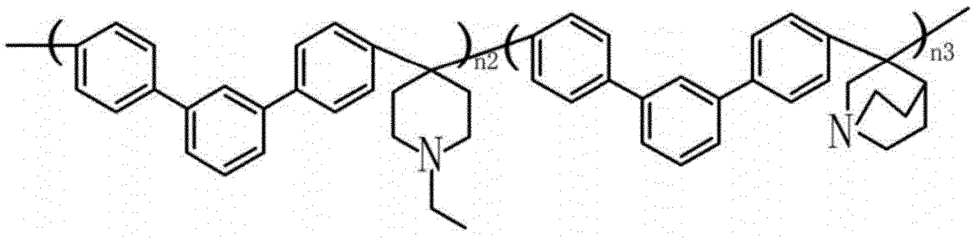

Example 4

The multicomponent copolymer including a chain segment I whose structural formula is represented as

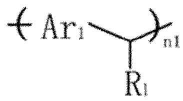,

a chain segment II whose structural formula is represented as

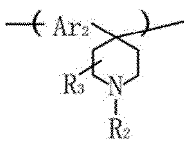

and a chain segment III whose structural formula is represented as

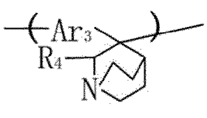

is manufactured, and includes a multicomponent chain segment IV whose structural formula is represented as

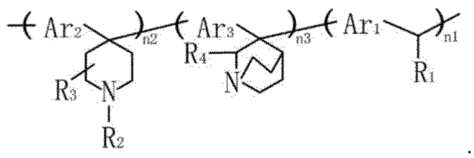

Manufacture of copolymer 4-1

At step S1, 0.15moL of p-terphenyl, 0.05moL of 3-quinuclidinone hydrochloride, 0.10moL of 1-Methyl-4-piperidone, and 0.03moL of isobutyraldehyde diethyl acetal are taken respectively.

At step S2, the raw materials weighed in step S1 are added into 50 mL of dichloromethane, and the raw materials are thoroughly mixed and dispersed in the dichloromethane to obtain a reaction base solution.

At step S3, 120mL of trifluoromethanesulfonic acid is added dropwise to the reaction base solution at a temperature of 0°C, the reaction system is raised to a temperature of 13°C after the drip addition is completed, and the raw materials are subjected to an alkylation reaction at this temperature for 36 hours.

At step S4, after completion of the reaction in step S3, a product is discharged in pure water, then filtered, and the resulting solid is pulverized, washed by using pure water, and dried in sequence, so as to obtain the final product, i.e., the copolymer 4-1.

A structural formula of the copolymer 4-1 is a following formula:

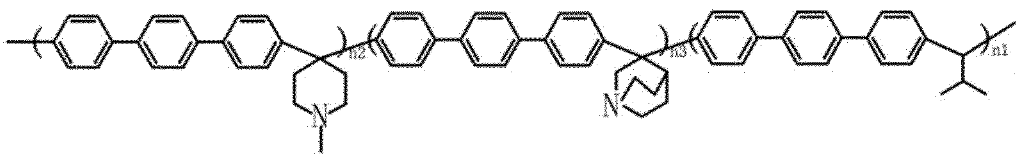

Manufacture of copolymer 4-2

At step S1, 0.15moL of 1,3-diphenylbenzene, 0.06moL of 3-quinuclidinone hydrochloride, 0.80moL of 1-Methyl-4-piperidone, and 0.04moL of isobutyraldehyde diethyl acetal are taken respectively.

At step S2, the raw materials weighed in step S1 are added into 80 mL of dichloromethane, and the raw materials are thoroughly mixed and dispersed in the dichloromethane to obtain a reaction base solution.

At step S3, 120mL of trifluoromethanesulfonic acid is added dropwise to the reaction base solution at a temperature of 3°C, the reaction system is raised to a temperature of 13°C after the drip addition is completed, and the raw materials are subjected to an alkylation reaction at this temperature for 48 hours.

At step S4, after completion of the reaction in step S3, a product is discharged in pure water, then filtered, and a resulting solid is pulverized, washed by using pure water, and dried in sequence, so as to obtain the final product, i.e., the copolymer 4-2.

A structural formula of the copolymer 4-2 is a following formula:

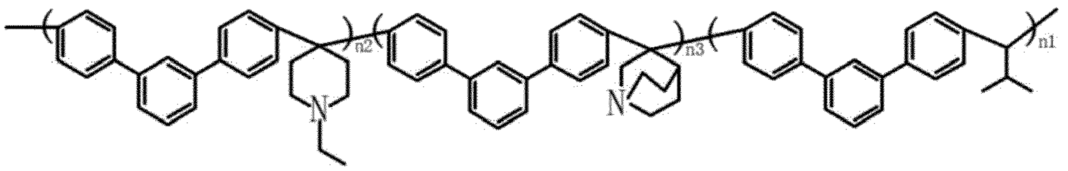

Comparative example 1

The polymer including a chain segment I whose structural formula is represented as

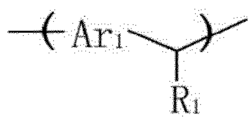

is manufactured, and has a general formula represented by

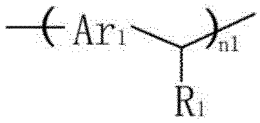

Manufacture of polymer 5-1

At step S1, 0.15moL of 1,3-diphenylbenzene, and 0.17moL of isobutyraldehyde diethyl acetal are taken respectively.

At step S2, the raw materials weighed in step S1 are added into 50 mL of dichloromethane, and the raw materials are thoroughly mixed and dispersed in the dichloromethane to obtain a reaction base solution.

At step S3, 90mL of trifluoromethanesulfonic acid is added dropwise to the reaction base solution at a temperature of -3°C, the reaction system is raised to a temperature of 18°C after the drip addition is completed, and the raw materials are subjected to an alkylation reaction at this temperature for 24 hours.

At step S4, after completion of the reaction in step S3, a product is discharged in pure water, then filtered, and a resulting solid is pulverized, washed by using pure water, and dried in sequence, so as to obtain the final product, i.e., the polymer 5-1.

A structural formula of the polymer 5-1 is a following formula:

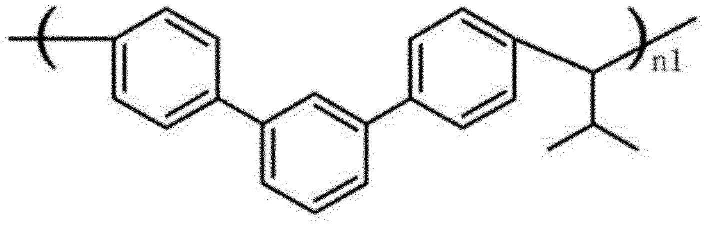

Comparative example 2

The polymer including a chain segment II whose structural formula is represented as

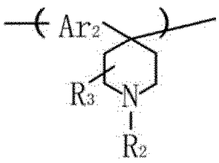

is manufactured, and has a general formula represented by

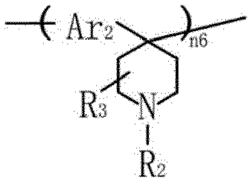

Manufacture of polymer 6-1

At step S1, 0.15moL of p-terphenyl, and 0.18moL of 3-quinuclidinone hydrochloride are taken respectively.

At step S2, the raw materials weighed in step S1 are added into 50 mL of dichloromethane, and the raw materials are thoroughly mixed and dispersed in the dichloromethane to obtain a reaction base solution.

At step S3, 120mL of trifluoromethanesulfonic acid is added dropwise to the reaction base solution at a temperature of 0°C, the reaction system is raised to a temperature of 24°C after the drip addition is completed, and the raw materials are subjected to an alkylation reaction at this temperature for 36 hours.

At step S4, after completion of the reaction in step S3, a product is discharged in pure water, then filtered, and a resulting solid is pulverized, washed by using pure water, and dried in sequence, so as to obtain the final product, i.e., the

polymer 6-1.

A structural formula of the polymer 6-1 is a following formula:

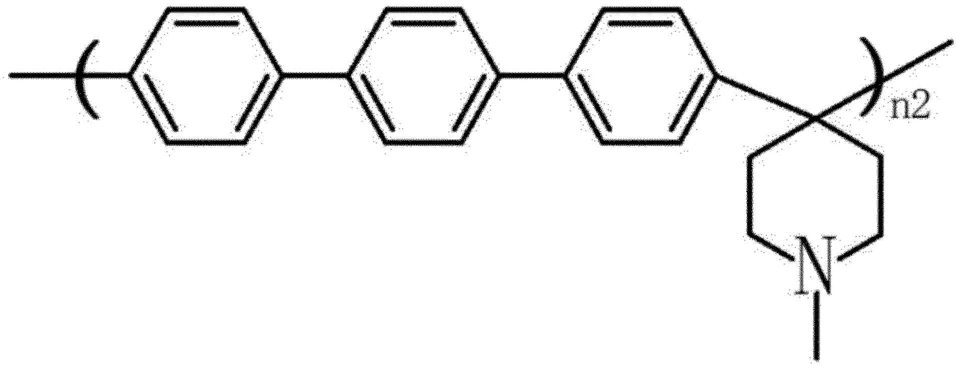

Comparative example 3

The polymer including a chain segment III whose structural formula is represented as

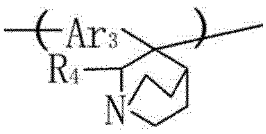

is manufactured, and has a general formula represented by

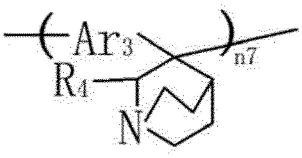

Manufacture of polymer 7-1

At step S1, 0.15moL of 1,3-diphenylbenzene, and 0.18moL of 1-methyl-4-piperidone are taken respectively.

At step S2, the raw materials weighed in step S1 are added into 50 mL of dichloromethane, and the raw materials are thoroughly mixed and dispersed in the dichloromethane to obtain a reaction base solution.

At step S3, 90mL of trifluoromethanesulfonic acid is added to the reaction base solution at a temperature of 0°C, the reaction system is raised to a temperature of 13°C after the drip addition is completed, and the raw materials are subjected to an alkylation reaction at this temperature for 6 hours.

At step S4, after completion of the reaction in step S3, a product is discharged in pure water, then filtered, and a resulting solid is pulverized, washed by using pure water, and dried in sequence, so as to obtain the final product, the polymer 7-1.

A structural formula of the polymer 7-1 is a following formula:

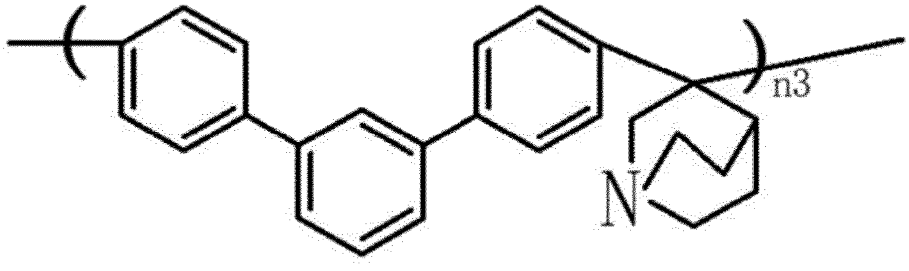

Example 5

In this example, the copolymer 1-1, the copolymer 1-2, the copolymer 2-1, the copolymer 2-2, the copolymer 3-1, the copolymer 3-2, the copolymer 4-1, the copolymer 4-2, the polymer 5-1, the polymer 6-1, and the polymer 7-1 manufactured in examples 1 to 4 and comparative examples 1 to 3 respectively are used as nitrogen-containing high polymers for manufacturing chloride-ion-type anionic resins. The methyl iodide is used as the quaternization reagent, and the chloride-ion-type anionic resin is manufactured through quaternization reaction and ion exchange.

Manufacture of chloride-ion-type anionic resin

At step 1, the nitrogen-containing high polymer and methyl iodide are dissolved in dimethyl sulfoxide to obtain a reaction solution, then the nitrogen-containing high polymer and the methyl iodide in the reaction solution undergo a quaternization reaction at a temperature ranging from 50°C to 100°C for 3~36 hours, and a product solution containing an iodine-ion-type anionic resin is obtained after the reaction is completed.

At step 2, a precipitating agent is added to the product solution, and deionized water is used as the precipitating agent in this example to sufficiently precipitate the precipitate; the precipitate thus obtained is then filtered out, the precipitate is ion-exchanged with KOH and NaCl aqueous solutions, washed, and dried; and the solid thus obtained is the chloride-ion-type anionic resin manufactured through the above quaternization reaction.

According to the different nitrogen-containing high polymers used, the highest conversion rate of the quaternization reaction is served as the optimization standard. Based on this, the conditions of the quaternization reaction are optimized and the optimized reaction conditions are shown in Table 1.

Table 1. Reaction Condition Of Quaternization Reaction in Example 5

| Nitrogen-containing high polymer | Nitrogen-containing high polymer: methyl iodide (molar ratio of feed material) | Reaction temperature of quaternization reaction | Reaction time of quaternization reaction |
|---|---|---|---|
| Copolymer 1-1 | 1:2 | 80 °C | 10h |
| Copolymer 1-2 | 1:2 | 80 °C | 10h |
| Copolymer 2-1 | 1:2 | 80 °C | 18h |
| Copolymer 2-2 | 1:2 | 80 °C | 24h |
| Copolymer 3-1 | 1:2 | 80 °C | 16h |
| Copolymer 3-2 | 1:2 | 80 °C | 16h |
| Copolymer 4-1 | 1:2.5 | 80 °C | 24h |
| Copolymer 4-2 | 1:2.5 | 80 °C | 24h |
| Polymer 5-1 | 1:1.5 | 70 °C | 8h |
| Polymer 6-1 | 1:1.5 | 70 °C | 6h |
| Polymer 7-1 | 1:1.5 | 70 °C | 14h |

Example 6

In this example, the copolymer 1-1, the copolymer 1-2, the copolymer 2-1, the copolymer 2-2, the copolymer 3-1, the copolymer 3-2, the copolymer 4-1, the copolymer 4-2, the polymer 5-1, the polymer 6-1, and the polymer 7-1 manufactured in examples 1 to 4 and comparative examples 1 to 3 respectively are used as nitrogen-containing high polymers for manufacturing sulfonic-type anionic resins. Sulfonic acid compound is used as the quaternization reagent, and the sulfonic-type anionic resin is manufactured through quaternization reaction.

Manufacture of sulfonic-type anionic resin

At step 1, a nitrogen-containing high polymer and a sulfonic acid compound are dissolved in dimethyl sulfoxide to obtain a reaction solution, and then the nitrogen-containing high polymer and the sulfonic acid compound in the reaction solution undergo a quaternization reaction at a temperature ranging from 70°C to 120°C for 3~72 hours to obtain a product solution containing a sulfonic anionic resin after completion of the reaction.

At step 2, a precipitating agent is added to the product solution, and deionized water is used as the precipitating agent in this example to sufficiently precipitate the precipitate, the precipitate obtained thereby is filtered out, washed, and dried, and the solid obtained thereby is the sulfonic anionic resin obtained by the above quaternization reaction.
According to the different nitrogen-containing high polymer used, the highest conversion rate of the quaternization reaction is used as the optimization standard. Based on this, the quaternization reagent type and reaction conditions of the quaternization reaction are optimized, respectively. The optimized reaction conditions are shown in Table 2.

Table 2. Reaction Condition of Quaternization Reaction in Example 6

| Nitrogen-contain ing high polymer | Quaternization reagent Sulfonic acid compound | Nitrogen-containing high polymer: sulfonic acid compound (molar ratio of feed material) | Reaction temperature of quaternization reaction | Reaction time of quaternization reaction |
|---|---|---|---|---|
| Copolymer 1-1 | Methyl p-toluenesulfonate | 1:2 | 80 °C | 24h |
| Copolymer 1-2 | Methyl p-toluenesulfonate | 1:2 | 80 °C | 24h |
| Copolymer 2-1 | Methyl 4-nitrobenzenesulfonate | 1:2 | 100 °C | 10h |
| Copolymer 2-2 | Methyl 4-nitrobenzenesulfonate | 1:2 | 100 °C | 8h |
| Copolymer 3-1 | Methyl p-toluenesulfonate | 1:2 | 110 °C | 14h |
| Copolymer 3-2 | Methyl p-toluenesulfonate | 1:2 | 110 °C | 14h |
| Copolymer 4-1 | Methyl 4-nitrobenzenesulfonate | 1:2.5 | 120 °C | 36h |
| Copolymer 4-2 | Methyl 4-nitrobenzenesulfonate | 1:2.5 | 120 °C | 36h |
| Polymer 5-1 | Methyl p-toluenesulfonate | 1:1.5 | 80 °C | 24h |
| Polymer 6-1 | Methyl p-toluenesulfonate | 1:1.5 | 100 °C | 12h |
| Polymer 7-1 | Methyl p-toluenesulfonate | 1:1.5 | 100 °C | 28h |

Test example 1

1. Test object

An anion exchange membrane is further manufactured by using the anionic resins manufactured in example 5 and example 6, and thus is taken as a test object.

2. Test items

(1) Mechanical property test

A pure tensile force is applied to the test object to break this test object with reference to Chinese national standard GB/T 20042.3.
Item a, tensile strength: it is recorded a ratio of a maximum load borne by the test object to a width of a stretched membrane when the test object is broken under the action of the pure tensile force, and the transverse tensile strength and the longitudinal tensile strength are divided for evaluating the mechanical strength of the membrane.
Item b, elongation at break: it is recorded a ratio of a distance between two points of the test object at break under the maximum load to the original length between these two points, in which the test object is subjected to this maximum load before the test object is broken. It is possible to derive the maximum deformation amount borne by the alkaline membrane before the alkaline membrane is stretched to break, for evaluating the flexibility of the alkaline membrane.

3. Test results

The test results of this test example are shown in Table 3 and Table 4.
The polymer 5-1 includes the structural unit whose structural formula is represented as

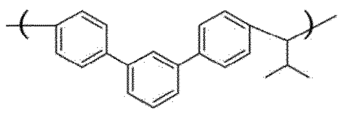

The molecular structures of the polymer 1-1, the polymer 2-1, and the polymer 4-2 include the above structural unit. However, compared with the test objects manufactured by using the polymer 5-1, when the anion types contained in the anionic resins are the same in shape, the test objects manufactured by using the polymer 1-1, the polymer 2-1, and the polymer 4-2 respectively are measured and have higher tensile strength and higher elongation at break. Although the molecular structures of the polymer 1-2, the polymer 2-2, and the polymer 4-1 do not contain exactly the same chain segments as the structural units constituting the polymer 5-1, the structural unit constituting the polymer 5-1 conforms to the general formula of the chain segment I which is represented as

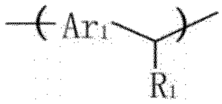

Similarly, the molecular structures of the polymer 1-2, the polymer 2-2, and the polymer 4-1 also include the structural units conforming to the above general formula of the chain segment I. However, compared with the test objects prepared by using the polymer 1-1, the polymer 2-1, and the polymer 4-2 respectively, when the anion types contained in the anionic resin are the same in shape, the test objects manufactured by using polymer 5-1 are measured and still have lower tensile strength and lower elongation at break.

A structural formula of the structural unit constituting the polymer 6-1 is represented as

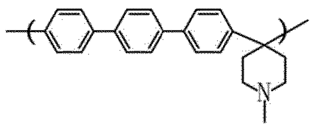

The molecular structures of the polymer 1-2, the polymer 3-1, and the polymer 4-1 also include the above structural units. However, compared with the test objects prepared by using the polymer 6-1, when the anion types contained in the anionic resin are the same in shape, the test objects prepared by using the polymer 1-2, the polymer 3-1, and the polymer 4-1 respectively are measured and have higher tensile strength and higher elongation at break. Although the molecular structures of the polymer 1-1, the polymer 3-2, and the polymer 4-2 do not contain exactly the same chain segments as the structural units constituting the polymer 6-1, the structural unit constituting the polymer 6-1 conforms to the general formula of the chain segment II which is represented as

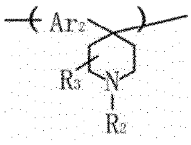

Similarly, the molecular structures of the polymer 1-1, the polymer 3-2, and the polymer 4-2 also include structural units conforming to the above general formula of the chain segment II. However, compared with the test objects prepared by using the polymer 1-1, the polymer 3-2, and the polymer 4-2 respectively, when the anion types contained in the anionic resin are the same in shape, the test objects manufactured by using the polymer 6-1 are measured and still have lower tensile strength and lower elongation at break.

A structural formula of the structural unit constituting the polymer 7-1 is represented as

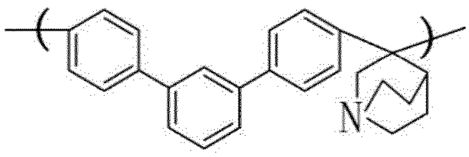

The molecular structures of the polymer 2-1, the polymer 3-2, and the polymer 4-2 also include the above structural units.

However, compared with the test objects prepared by using the polymer 7-1, when the anion types contained in the anionic resin are the same in shape, the test objects prepared by using the polymer 2-1, the polymer 3-2, and the polymer 4-2 respectively are measured and have higher tensile strength and higher elongation at break. Although the molecular structures of the polymer 2-2, the polymer 3-1, and the polymer 4-1 do not contain exactly the same chain segments as the structural units constituting polymer 7-1, the structural unit constituting the polymer 7-1 conforms to the general formula of the chain segment III which is represented as

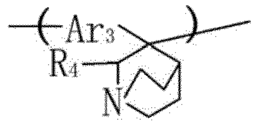

Similarly, the molecular structures of the polymer 2-2, the polymer 3-1, and the polymer 4-1 also include structural units conforming to the above general formula of the chain segment III. However, compared with the test objects prepared by using the polymer 2-2, the polymer 3-1, and the polymer 4-1 respectively, when the anion types contained in the anionic resin are the same in shape, the test objects manufactured by using the polymer 7-1 are measured and still have lower tensile strength and lower elongation at break.

In general, the test results of the present test example are as follows. The nitrogen-containing multicomponent copolymer is formed by selecting and combining any two or more of the above-mentioned chain segments, and the anionic resin and the anion exchange membrane are further manufactured by using these nitrogen-containing multicomponent copolymers. Compared with the nitrogen-containing high polymer constructed by using one of the structural units of the chain segment I, the chain segment II, and the chain segment III, respectively, the flexibility of the anion exchange membrane obtained in this application may be improved, and the anion exchange membrane has higher tensile strength and higher elongation at break. Such anion exchange membrane is applied to the electrolytic bath, which can optimize the interface contact between the electrodes.

Table 3. Mechanical Properties Test of Chloride-Ion-Type Anionic Resin in Example 5 as Test Object

| Nitrogen-containing high polymer for manufacturing chloride-ion-type anionic resin | Tensile strength (MPa) | Elongation at break (%) |
|---|---|---|
| Copolymer 1-1 | 45 | 21 |
| Copolymer 1-2 | 44 | 23 |
| Copolymer 2-1 | 52 | 19 |
| Copolymer 2-2 | 40 | 25 |
| Copolymer 3-1 | 47 | 22 |
| Copolymer 3-2 | 47 | 21 |
| Copolymer 4-1 | 43 | 19 |
| Copolymer 4-2 | 41 | 23 |
| Polymer 5-1 | 35 | 18 |
| Polymer 6-1 | 37 | 16 |
| Polymer 7-1 | 38 | 14 |

Table 4. Mechanical Properties Test of Sulfonic Anionic Resin in Example 6 as Test Object

| Nitrogen-containing high polymer for manufacturing sulfonic anionic resin | Tensile strength (MPa) | Elongation at break (%) |
|---|---|---|
| Copolymer 1-1 | 51 | 16 |
| Copolymer 1-2 | 52 | 18 |
| Copolymer 2-1 | 60 | 13 |
| Copolymer 2-2 | 46 | 19 |
| Copolymer 3-1 | 54 | 14 |

(continued)

| Nitrogen-containing high polymer for manufacturing sulfonic anionic resin | Tensile strength (MPa) | Elongation at break (%) |
|---|---|---|
| Copolymer 3-2 | 54 | 15 |
| Copolymer 4-1 | 46 | 14 |
| Copolymer 4-2 | 48 | 18 |
| Polymer 5-1 | 41 | 12 |
| Polymer 6-1 | 43 | 9 |
| Polymer 7-1 | 45 | 8 |

Test Example 2

1. Test Object

An anion exchange membrane is further manufactured by using the anionic resins manufactured in Example 5, and thus is taken as a test object.

2. Stability test

Test method: the test object is cut into membrane samples each having a size of 2cm × 2cm, and the membrane samples are soaked in the 1M of NaOH aqueous solution and sealed. The solution is placed in an oven with a temperature of 80°C for 2000 hours. The membrane samples are taken out and performed the 1H Nuclear Magnetic Resonance spectra (HNMR) test to calculate the degradation rate of the membrane sample. A grafting rate of the original membrane material is recorded as $G_0$, a grafting rate of the membrane material after soaked in NaOH aqueous solution is record as Gi, and the degradation rate is calculated based on a formula denoted by $[(G_0-G_1)/G_0]*100\%$.

Calculating mode of grafting rate

a, Determination of Ion Exchange Capacity (IEC)

The test object is cut to membrane samples with a specification of 50mm × 50mm. The membrane samples are soaked in the 1 mol/L KOH solution at a temperature of 80°C for 24 hours to exchange the anions in the membrane samples into hydroxyl, so as to obtain hydroxide membrane samples. The above-mentioned hydroxide membrane samples are soaked in the 1 mol/L NaCl solution at a temperature of 60°C, and let stand for 48 hours to perform ion exchange, so that the hydroxyls in the hydroxide membrane samples are exchanged to chloride ions to obtain the chlorine-type membrane samples. The chlorine-type membrane samples are washed thoroughly by using deionized water to ensure that the NaCl solution adsorbed on the chlorine-type membrane samples is completely washed away. The filter paper is used to dry out the moisture on the surfaces of the chlorine-type membrane samples, then the dried chlorine-type membrane samples are placed in 50 mL of 0.1 mol/L $NaNO_3$ solution and soaked at a temperature of 60°C for 48 hours, so as to allow the chloride ions in the membrane samples to be completely exchanged into the $NaNO_3$ solution. The amount of chloride ions exchanged in the $NaNO_3$ solution is equal to the amount of anions to be measured in the test objects prepared by the above quaternization reaction. The amount of chloride ions in the titration membrane: 10 mL of $NaNO_3$ solution that has fully soaked the chlorine-type membrane samples is added into the Erlenmeyer flask; two drops of $K_2CrO_4$ as an indicator are added; the calibrated 0.01 mol/L $AgNO_3$ is used to titrate the above $NaNO_3$ solution until a brick-red precipitate is produced, and the volume of $AgNO_3$ solution consumed is recorded as $V_{AgNO3}$. Titrate operation is performed three times in parallel, and the average value at these three times is obtained to calculate the chloride ion content in the chlorine-type membrane sample. Finally, the membrane sample is taken out and washed thoroughly by using deionized water. After the washed membrane sample is fully dried in the oven, the dried membrane is quickly taken out and the mass of the dried membrane is weighed to recorded as $m_{dry}$. The ion exchange capacity of the membrane sample may be calculated by the formula denoted by $IEC=5 \times C_{AgNO3} \times V_{AgNO3}/m_{dry}$, in which IEC denotes the ion exchange capacity of the membrane sample, the unit is mol/g; $C_{AgNO3}$ denotes the concentration of the calibrated $AgNO_3$ solution, the unit is mol/L, and a value of the parameter $C_{AgNO3}$ is an average of the three titration results; $V_{AgNO3}$ denotes a volume of $AgNO_3$ solution consumed in the titration, the unit is L, a value of the parameter $V_{AgNO3}$ is an average of the three titration amount; and $m_{dry}$ denotes the mass of the dried membrane sample after drying and titration, the unit is g.

b. Calculation formula of grafting rate

The grafting rate is a ratio of an actual grafting rate to a theoretical grafting rate, i.e., expressed by:

$$\text{grafting rate}=(IEC_{actual}/IEC_{theory})*100\%.$$

3. Test results

The test results of this test example are as shown in Table 5. Among the test objects, the measured degradation rates of the chloride-ion-type anion exchange resin prepared by using the copolymer 5-1, the copolymer 6-1, and the copolymer 7-1 respectively are relatively high. As mentioned above, the copolymer 5-1, the copolymer 6-1, and the copolymer 7-1 are nitrogen-containing high polymers constructed by using independently one structural unit of the chain segment I, the chain segment II, and the chain segment III respectively. The experimental results of this test example show that the nitrogen-containing multicomponent copolymer is formed by selecting and combining any two or more of the above-mentioned chain segments, and the anionic resin and the anion exchange membrane are further manufactured by using these nitrogen-containing multicomponent copolymers, so that the alkali resistance of the anion exchange membrane may be improved and the degradation rate of the anion exchange membrane in the electrolytic bath may be reduced. In addition, the alkali resistance of the anionic resin is mainly determined by the main molecular structure of the anionic resin. Although the anionic resin prepared in example 6 is different from the anionic resin prepared in example 5 in the anion species, when the sulfonic anionic resin prepared in example 6 is used for the alkali resistance test, the results of the test are consistent with the results of the present test example.

Table 5. Alkali-resistance Properties Test of Chloride-Ion-Type Anionic Resin in Example 5 as Test Object

| Nitrogen-containing high polymer for manufacturing chloride-ion-type anionic resin | Degradation rate |
|---|---|
| Copolymer 1-1 | 4% |
| Copolymer 1-2 | 5% |
| Copolymer 2-1 | 4% |
| Copolymer 2-2 | 5% |
| Copolymer 3-1 | 3% |
| Copolymer 3-2 | 4% |
| Copolymer 4-1 | 5% |
| Copolymer 4-2 | 5% |
| Polymer 5-1 | 9% |
| Polymer 6-1 | 6% |
| Polymer 7-1 | 7% |

## Claims

**1.** An anitrogen-containing multicomponent copolymer, comprising:

at least two of a chain segment I, a chain segment II, and a chain segment III;
wherein a structural formula of the chain segment I is represented by

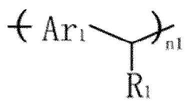
,

wherein $Ar_1$ is an aryl structural unit;
a structural formula of the chain segment II is represented by

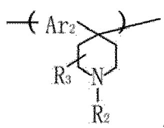,

wherein $Ar_2$ is an aryl structural unit; and
a structural formula of the chain segment III is represented by

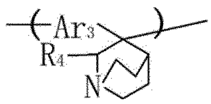,

wherein $Ar_3$ is an aryl structural unit.

2. The anitrogen-containing multicomponent copolymer according to claim 1, wherein the $Ar_1$, the $Ar_2$, and the $Ar_3$ each independently comprise at least one of following structural units:

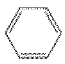 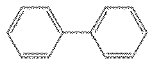 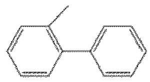 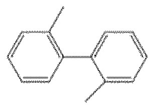

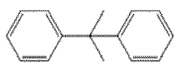 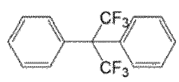 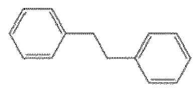 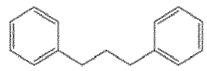

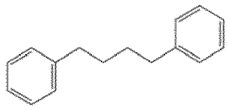 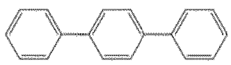 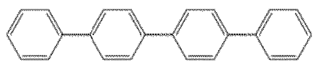

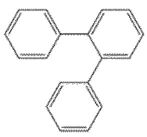 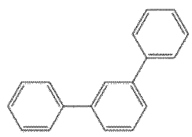 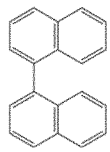 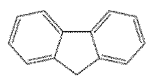

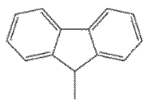 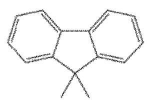 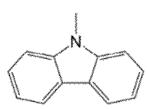 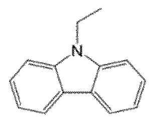

3. The nitrogen-containing multicomponent copolymer according to claim 1, wherein the $R_1$, the $R_2$, the $R_3$, and the $R_4$ are each independently selected from hydrogen, hydrocarbyl, or substituted hydrocarbyl.

4. The nitrogen-containing multicomponent copolymer according to any one of claims 1 to 3, wherein the multicomponent copolymer comprises a multicomponent chain segment I comprising the chain segment I and the chain segment II, wherein a structural formula of the multicomponent chain segment I is represented by

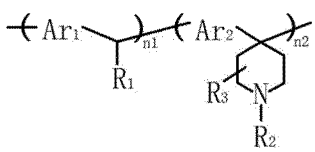,

wherein n1 denotes a degree of polymerization of the chain segment I, and is a positive integer; and n2 denotes a

degree of polymerization of the chain segment II, and is a positive integer;

the multicomponent copolymer comprises a multicomponent chain segment II comprising the chain segment I and the chain segment III, a structural formula of the multicomponent chain segment II is represented by

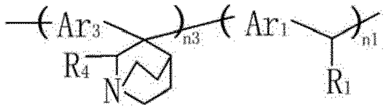

,

wherein n1 denotes a degree of polymerization of the chain segment I, and is a positive integer; and n3 denotes a degree of polymerization of the chain segment III, and is a positive integer;
the multicomponent copolymer comprises a multicomponent chain segment III comprising the chain segment II and the chain segment III, a structural formula of the multicomponent chain segment III is represented by

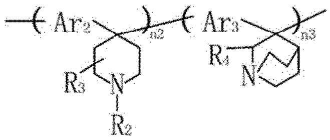

,

wherein n2 denotes a degree of polymerization of the chain segment II, and is a positive integer; and n3 denotes a degree of polymerization of the chain segment III, and is a positive integer;
and/or the multicomponent copolymer comprises a multicomponent chain segment IV comprising the chain segment I, the chain segment II, and the chain segment III, the multicomponent chain segment IV is represented by

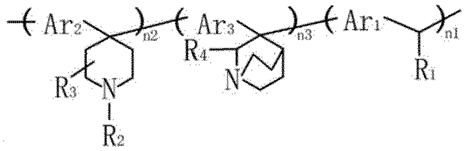

,

wherein n1 denotes a degree of polymerization of the chain segment I, and is a positive integer; n2 denotes a degree of polymerization of the chain segment II, and is a positive integer; and n3 denotes a degree of polymerization of the chain segment III, and is a positive integer.

**5.** A method of manufacturing the nitrogen-containing multicomponent copolymer according to any of claims 1 to 4, the method comprising:

preparing a monomer raw material, selecting a corresponding aromatic monomer based on aryl structural units comprised in a main chain of the multicomponent copolymer to use the aromatic monomer as the monomer raw material of the main chain, selecting a branched monomer raw material based on chain-segment types in the multicomponent copolymer; wherein the branched monomer raw material comprises an acetal monomer whose general formula is represented as

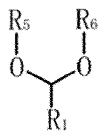

,

when the multicomponent copolymer comprises the chain segment I; the branched monomer raw material comprises a piperidone monomer whose general formula is represented as

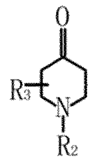,

when the multicomponent copolymer comprises the chain segment II; the branched monomer raw material comprises a quinuclidone monomer whose general formula is represented as

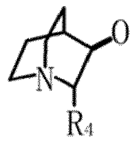,

when the multicomponent copolymer comprises the chain segment III;
adding the monomer raw material to an alkyl-based organic solvent, and sufficiently dispersing the monomer raw material, so as to obtain a reaction base solution;
adding an organic acid catalyst to the reaction base solution such that at least two of the aromatic monomer, the acetal monomer, the piperidone monomer and the quinuclidone monomer in the reaction base solution undergo a polymerization reaction under the action of the organic acid catalyst;
discharging a product obtained from the polymerization reaction in pure water or alkaline solution so as to wash the organic acid catalyst that is residual, and obtaining the multicomponent copolymer after the product is washed and dried.

**6.** The method according to claim 5, wherein the acetal monomer comprises at least one of the following monomers:

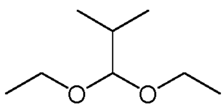
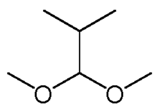
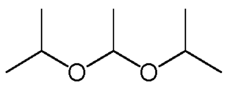
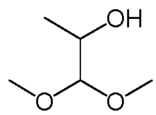
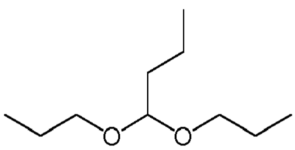
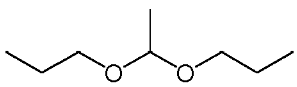
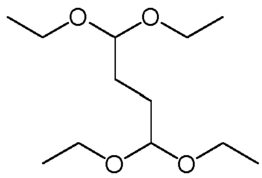
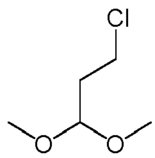;

the piperidone monomer comprises at least one of the following monomers:

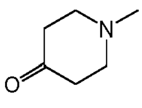
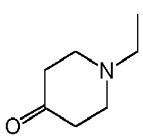
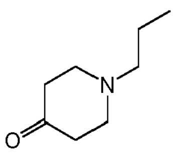
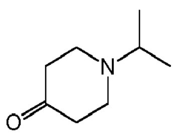
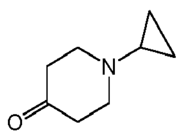
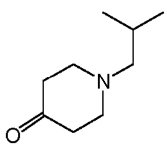
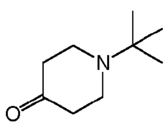
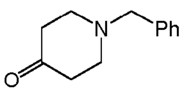
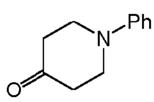
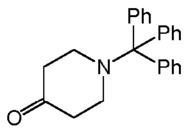

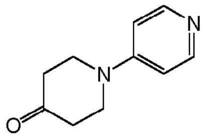 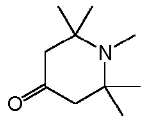 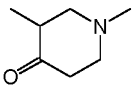 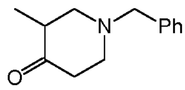 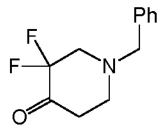 ;

and/or the quinuclidone monomer comprises at least one of the following monomers:

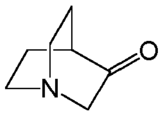 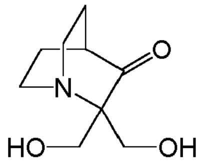 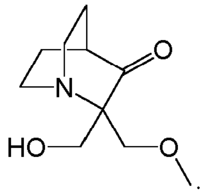

**7.** The method according to any one of claims 5 to 6, wherein the organic acid catalyst comprises at least one of methanesulfonic acid, perfluoropropionic acid, trifluoroacetic acid, trifluoromethanesulfonic acid, and heptafluorobutyric acid.

**8.** The method according to claim 7, further comprising reducing a temperature of the reaction base solution to a range from -5°C to 3°C before a step of adding an organic acid catalyst to the reaction base solution, wherein a step of adding the organic acid catalyst to the reaction base solution such that the at last two of the aromatic monomer, the acetal monomer, the piperidone monomer and the quinuclidone monomer in the reaction base solution undergo the polymerization reaction under the action of the organic acid catalyst comprises: raising the temperature of the reaction base solution to a temperature ranging from 5°C to 24°C, and polymerizing the at least two of the aromatic monomer, the acetal monomer the piperidone monomer and the quinuclidone monomer_for 4~48h under the temperature ranging from 5°C to 24°C.

**9.** The method according to any one of claims 5 to 8, wherein the alkyl-based organic solvent comprises at least one of dichloromethane, trichloromethane, chloroform, and tetrahydrofuran; and/or
the alkaline solution comprises at least one of sodium hydroxide, sodium bicarbonate, potassium bicarbonate, potassium carbonate, sodium carbonate or potassium hydroxide.

**10.** An anionic resin comprising:

at least two of a chain segment I, a chain segment IV, and a chain segment V;
wherein a structural formula of the chain segment I is represented by

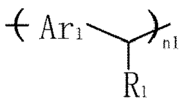 ,

wherein $Ar_1$ is an aryl structural unit;
a structural formula of the chain segment IV is represented by

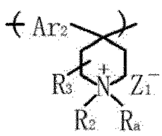 ,

wherein $Ar_2$ is an aryl structural unit, and $Z_1^-$ denotes an anion; and
a structural formula of the chain segment V is represented by

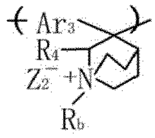,

wherein $Ar_3$ is an aryl structural unit, and $Z_2^-$ denotes an anion.

**11.** The anionic resin according to claim 10, wherein the $Ar_1$, the $Ar_2$, and the $Ar_3$ each independently comprise at least one of the following structural units:

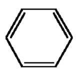 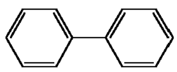 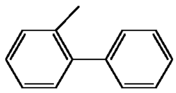 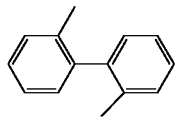

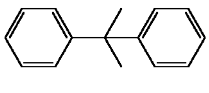 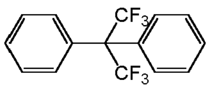 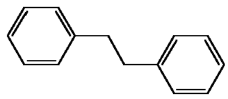 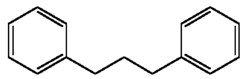

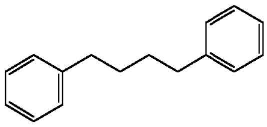 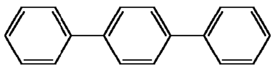 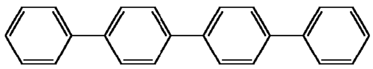

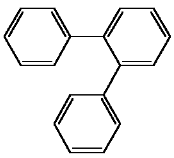 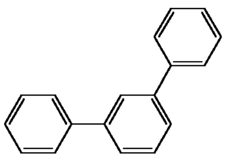 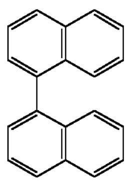 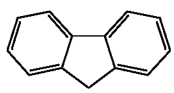

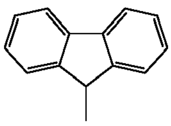 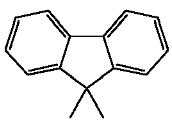 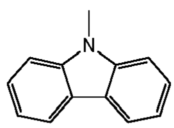 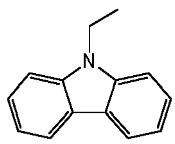

**12.** The anionic resin according to any one of claims 10 to 11, wherein the $R_1$, the $R_2$, the $R_3$, and the $R_4$ are each independently selected from hydrogen, hydrocarbyl, or substituted hydrocarbyl.

**13.** The anionic resin according to any one of claims 10 to 12, wherein the anionic resin comprises a multicomponent chain segment V comprising the chain segment I and the chain segment IV, a structural formula of the multicomponent chain segment V is represented by

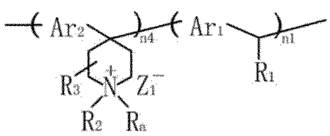,

wherein n1 denotes a degree of polymerization of the chain segment I, and is a positive integer; n4 denotes a degree of polymerization of the chain segment IV, and is a positive integer; the $R_a$ is selected from one of aryl, $C_1$ to $C_{10}$ chain alkyl, and $C_3$ to $C_{10}$ cycloalkyl;

the anionic resin comprises a multicomponent chain segment VI comprising the chain segment I and the chain segment V, a structural formula of the multicomponent chain segment VI is represented by

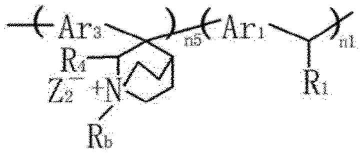

,

wherfein n1 denotes a degree of polymerization of the chain segment I, and is a positive integer; n5 denotes a degree of polymerization of the chain segment V, and is a positive integer; the $R_b$ is selected from one of aryl, $C_1$ to $C_{10}$ chain alkyl, and $C_3$ to $C_{10}$ cycloalkyl;

the anionic resin comprises a multicomponent chain segment VII comprising the chain segment IV and the chain segment V, wherein a structural formula of the multicomponent chain segment VII is represented by

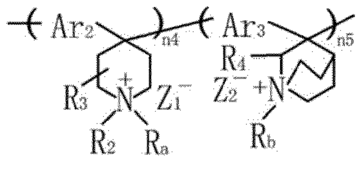

,

wherein n4 denotes a degree of polymerization of the chain segment IV, and is a positive integer; n5 denotes a degree of polymerization of the chain segment V, and is a positive integer; the $R_a$ and the $R_b$ each independently selected from one of aryl, $C_1$ to $C_{10}$ chain alkyl, and $C_3$ to $C_{10}$ cycloalkyl;

and/or the anionic resin comprises a multicomponent chain segment VIII comprising the chain segment I, the chain segment IV and the chain segment V, a structural formula of the multicomponent chain segment VIII is represented by

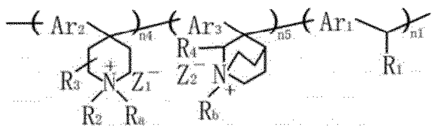

,

wherein n1 denotes a degree of polymerization of the chain segment I, and is a positive integer; n4 denotes a degree of polymerization of the chain segment IV, and is a positive integer; n5 denotes a degree of polymerization of the chain segment V, and is a positive integer; the $R_a$ and the $R_b$ each independently selected from one of aryl, $C_1$ to $C_{10}$ chain alkyl, and $C_3$ to $C_{10}$ cycloalkyl.

**14.** A method for manufacturing an anionic resin, comprising enabling the multicomponent copolymer according to any one claims 1 to 4 and quaternization reagent undergo a quaternization reaction to obtain the anionic resin, wherein the quaternization reagent comprises at least one of iodomethane; iodoethane; 1-iodopropane; 1-iodobutane; 1-iodopentane; 1-iodohexane; bromoethane; 1-bromopropane; 1-bromobutane; 1-bromopentane; 1-bromohexane; bromocyclohexane; bromocyclopentane;; methyl methanesulfonate; ethyl methanesulfonate; propyl methanesulfonate; butyl methanesulfonate; N-propyl ethyl sulfonate; ethanesulfonic acid ethyl ester; 3-butynyl methanesulfonate; ethenesulfonic acid, 2-propenyl ester; methyl benzenesulfonate; methyl p-toluenesulfonate; methyl nitrobenzenesulfonate; methyl trifluoromethanesulfonate; ethyl trifluoromethanesulfonate; ethyl toluenesulfonate; toluene-4-sulfonic acid cyclobutyl ester; P-toluenesulfonic acid n-butyl ester; benzenesulfonic acid neopentyl ester; tetrahydro-2H-pyran-4-yl methanesulfonate; or P-toluenesulfonic acid cyclohexyl ester.

**15.** An anion exchange membrane comprising the anionic resin according to any one of claims 10 to 13.

Europäisches Patentamt
European Patent Office
Office européen des brevets

# EUROPEAN SEARCH REPORT

Application Number
EP 24 20 1450

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | CN 117 285 701 A (WUHAN LIMO TECH CO LTD) 26 December 2023 (2023-12-26)<br>* example 3 *<br>* claims 1-11 * | 1-4, 10-15<br>5-9 | INV.<br>B01D71/62<br>C08G61/12<br>C08G73/18<br>C08G73/22<br>C08J5/22 |
| X<br>A | CN 116 693 785 A (WUHAN LIMO TECH CO LTD) 5 September 2023 (2023-09-05)<br>* example 5 *<br>* claims 1-13 * | 1-4, 10-15<br>5-9 | |
| X | CN 117 285 819 A (WUHAN LIMO TECH CO LTD) 26 December 2023 (2023-12-26)<br>* example 1 *<br>* claims 1-12 * | 1-3, 10-12, 14,15 | |

TECHNICAL FIELDS SEARCHED (IPC)

B01D
C08J
C09J
C08G

The present search report has been drawn up for all claims

| Place of search | Date of completion of the search | Examiner |
|---|---|---|
| The Hague | 6 March 2025 | Popescu, Teodora |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 24 20 1450

This annex lists the patent family members relating to the patent documents cited in the above-mentioned European search report. The members are as contained in the European Patent Office EDP file on
The European Patent Office is in no way liable for these particulars which are merely given for the purpose of information.

06-03-2025

| Patent document cited in search report | Publication date | Patent family member(s) | Publication date |
|---|---|---|---|
| CN 117285701 A | 26-12-2023 | NONE | |
| CN 116693785 A | 05-09-2023 | AU 2023380652 A1 | 30-01-2025 |
| | | CN 116693785 A | 05-09-2023 |
| | | EP 4520775 A1 | 12-03-2025 |
| | | US 2024336737 A1 | 10-10-2024 |
| | | WO 2024104062 A1 | 23-05-2024 |
| CN 117285819 A | 26-12-2023 | NONE | |

EPO FORM P0459

For more details about this annex : see Official Journal of the European Patent Office, No. 12/82